# FASCICULE DE BREVET EUROPEEN

(11) **EP 0 340 085 B1**
(45) Date de publication et mention de la délivrance du brevet: **31.01.1996**
(21) Numéro de dépôt: 89401125.3
(22) Date de dépôt: 21.04.1989
(51) Int. Cl.: G11B 5/49, G11B 5/17, G11B 15/12, G11B 5/31

(54) **Dispositif matriciel à têtes magnétiques, notamment en couches minces**
Magnetkopf-Matrixanordnung, insbesondere aus Dünnfilmen
Magnetic head matrix device, especially one made of thin films

(30) Priorité: 27.04.1988 FR 8805592
(43) Date de publication de la demande: 02.11.1989
(60) Demande divisionnaire: 95111116.0
(73) Titulaire: THOMSON-CSF, F-75008 Paris (FR)
(72) Inventeur: Lehureau, Jean-Claude, F-92045 Paris la Défense Cédex 67 (FR)
(74) Mandataire: Grynwald, Albert

(56) Documents cités:
- EP-A- 0 097 836
- WO-A-87/00959
- GB-A- 1 197 266
- US-A- 3 309 681
- US-A- 3 483 538
- US-A- 3 492 663
- US-A- 3 662 361
- US-A- 3 881 192
- US-A- 3 947 831
- US-A- 4 303 956
- IBM TECHNICAL DISCLOSURE BULLETIN vol. 15, no. 4, Septembre 1972, ARMONK, N. Y. , US page 1300 F. B. SHELLEDY 'Pulse write biasing'

## Description

L'invention est relative à un dispositif d'enregistrement magnétique à pluralité de têtes, notamment en couches minces.

Pour l'enregistrement et la lecture d'informations sur des supports magnétiques, notamment des bandes, on cherche de plus en plus à miniaturiser les têtes d'enregistrement de façon à augmenter la densité d'informations sur le support. Pour la miniaturisation on fait appel en général à des têtes en couches minces.

Une tête magnétique est constituée d'un circuit magnétique à entrefer associé à un bobinage auquel est appliqué le signal à enregistrer sur le support disposé au voisinage de l'entrefer. Ce signal appliqué au bobinage crée un champ magnétique qui sert à aimanter la petite zone du support qui se trouve au voisinage de l'entrefer.

On cherche également à associer plusieurs têtes magnétiques de façon à éviter les mouvements de la tête. Par exemple pour les bandes, en particulier pour magnétoscopes, on a intérêt à prévoir une ligne de têtes magnétiques, une par piste sur la bande. En outre l'association de plusieurs têtes permet d'augmenter la rapidité d'écriture d'informations sur le support.

Un dispositif à pluralité de têtes magnétiques possédant toutes les caractéristiques du préambule de la revendication 1 est décrit dans la demande de brevet européen EP-A-0 097 836. Un dispositif à pluralité de têtes magnétiques, dont les têtes sont en couches minces, est connu du brevet américain US-A-3 662 361.

L'invention permet une réalisation particulièrement simple d'un ensemble de têtes magnétiques d'enregistrement.

Le dispositif de l'invention est défini par la revendication 1.

A chaque tête magnétique correspondent deux fils conducteurs, l'un de ligne et l'autre de colonne. Pour que cette tête magnétique inscrive une information sur le support la somme des intensités des courants traversant chacun des fils doit dépasser une valeur prédéterminée. A cet effet, l'intensité du courant dans chaque conducteur d'une tête inscrivant une information présente une première valeur alors que les têtes n'inscrivant pas d'information sont associées à au moins un conducteur parcouru par un courant dont l'intensité a une seconde valeur, inférieure en valeur absolue à la première. Autrement dit une information est inscrite seulement par les têtes magnétiques auxquelles correspondent des fils de ligne et de colonne parcourus simultanément par un courant d'intensité suffisante .

De préférence les têtes magnétiques sont du type en couches minces déposées sur un substrat de manière que le champ magnétique créé soit parallèle à la surface du substrat, l'entrefer constituant une couche perpendiculaire à cette surface. Pour fabriquer de telles têtes magnétiques on peut avoir recours à un procédé qui consiste à d'abord déposer sur le substrat un premier pôle puis à déposer la matière constituant l'entrefer, cette seconde couche ayant une épaisseur moins importante que la première et recouvrant une tranche d'extrémité de la première couche, puis on dépose au moins sur la couche d'entrefer une troisième couche en matériau magnétique constituant le second pôle. Enfin on polit ou décape ces couches minces de façon à dégager l'entrefer. Avec un tel procédé on peut obtenir un entrefer d'épaisseur très faible.

Pour fermer le circuit magnétique associé à chaque tête magnétique en couches minces, dans une réalisation on prévoit un autre substrat en matériau magnétique sur lequel est disposé le premier substrat par sa face opposée à celle sur laquelle sont déposés les pôles et l'entrefer, des pôles étant formés dans ce substrat en matériau magnétique aux emplacements correspondant aux pôles des têtes magnétiques. En variante les couches minces sont déposées directement sur le substrat magnétique qui est de préférence en forme de plaque.

Ce substrat magnétique présente par exemple des rainures dans lesquelles on dispose les fils de lignes et de colonnes.

D'autres caractéristiques et avantages de l'invention apparaîtront avec la description de certains de ses modes de réalisation, celle-ci étant effectuée en se référant aux dessins ci-annexés sur lesquels :
- la figure 1 est un schéma montrant les diverses parties d'un dispositif à têtes magnétiques selon l'invention,
- la figure 2 est une coupe selon la ligne 2-2 de la figure 1,
- les figures 3ₐ à 3_{d} sont des schémas montrant un procédé de réalisation d'une tête magnétique du dispositif de la figure 1,
- la figure 4 est un schéma illustrant le fonctionnement du dispositif de la figure 1,

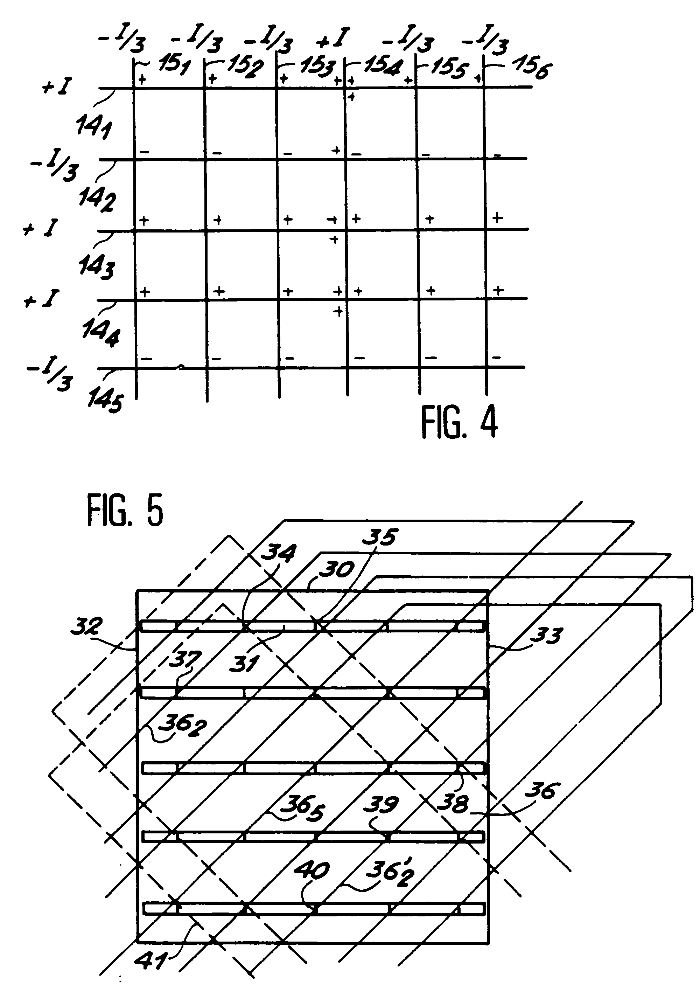

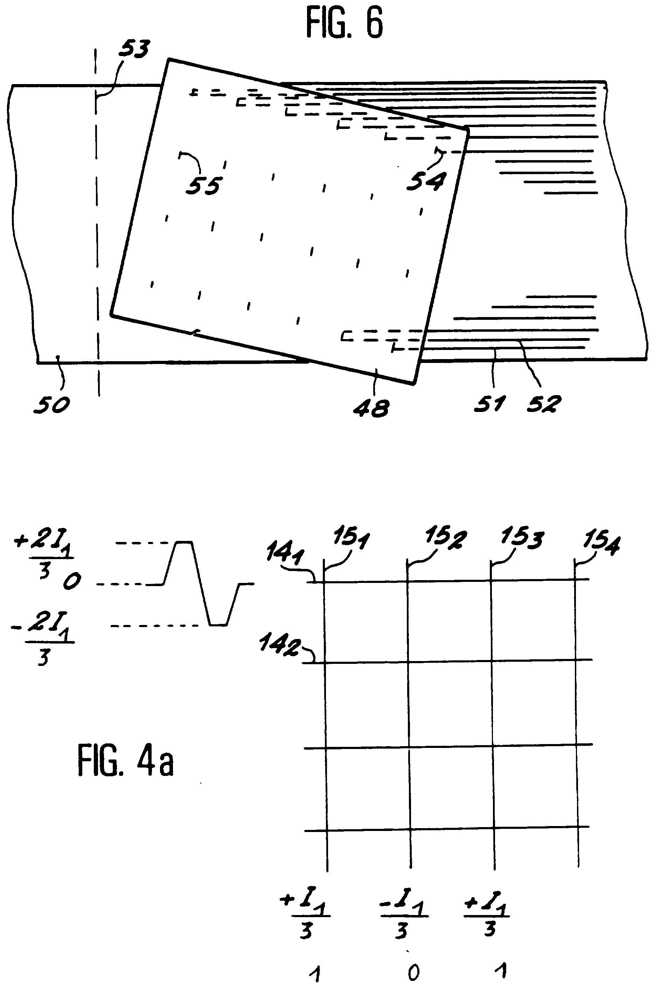

- la figure 4ₐ correspond à une variante de la figure 4,

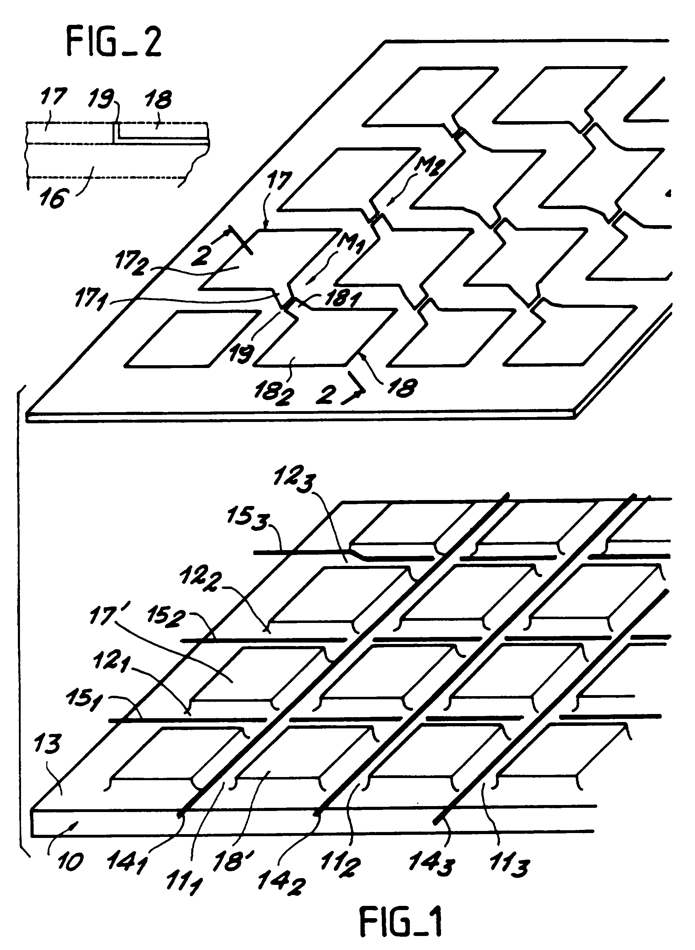

- la figure 5 est un schéma d'une variante d'un dispositif de la figure 1, et
- la figure 6 est un schéma illustrant l'utilisation du dispositif de la figure 1 ou de la figure 5.

Le dispositif à têtes magnétiques M₁, M₂... représenté sur les figures 1 et 2 comporte une plaque 10 en matière magnétique telle qu'une ferrite avec des rainures rectilignes 11₁, 11₂, 11₃... 12₁, 12₂, 12₃... sur l'une de ses faces 13. Les rainures 11₁, 11₂, 11₃... sont parallèles entre elles et forment des lignes tandis que les rainures 12₁, 12₂, 12₃... sont perpendiculaires aux lignes et forment des colonnes.

Dans chaque rainure est disposé un conducteur électrique 14₁, 14₂, 14₃..., 15₁, 15₂, 15₃... Le conducteur 14₁ est disposé dans la rainure 11₁, le conducteur 14₂ dans la rainure 11₂,..., le conducteur 15₁ se trouve dans la rainure 12₁, etc...

Sur la plaque 10 en matériau magnétique est collée une autre plaque 16 en matériau amagnétique sur la face libre 16₁ de laquelle sont formées les pièces polaires 17, 18 et l'entrefer 19 d'une série de têtes magnétiques dont le nombre est égal au nombre d'intersections entre les conducteurs de lignes et les conducteurs de colonnes. La disposition est telle que chaque entrefer 19 se trouve sous l'intersection d'un conducteur de ligne et d'un conducteur de colonne. Ainsi, sur la figure 1, l'entrefer 19 couvre l'intersection des conducteurs 14₁ et 15₁. De plus chaque pièce polaire 17, 18 couvre un pavé 17', 18' de la plaque 10. Par "pavé" on entend un élément en relief de la surface 13 qui est délimité par des rainures. On précise aussi que les conducteurs 14 et 15 ne sont pas sécants mais que par "intersection" on entend le point de chacun de ces conducteurs qui a une même projection sur le plan de la plaque 10.

Les pièces polaires 17 et 18, et donc les pavés 17' et 18', se trouvent de part et d'autre du conducteur 14₁ (ou de la rainure 11₁) ainsi que de part et d'autre du conducteur 15₁ (ou de la rainure 12₁). Ainsi les pièces polaires 17 et 18 ont une partie 17₂, 18₂ de plus grande surface de forme carrée ou rectangulaire couvrant le pavé correspondant 17', 18' ainsi qu'une extension 17₁, 18₁ de l'un des coins du rectangle au voisinage de l'intersection des conducteurs 14₁ et 15₁. L'entrefer 19 se trouve entre ces extensions 17₁ et 18₁. La direction générale de ces extensions correspond à une diagonale, c'est-à-dire environ 45° par rapport aux lignes et aux colonnes.

La direction générale de la fente de l'entrefer 19 est par exemple parallèle aux conducteurs 14₁. Dans une variante des entrefers sont inclinés d'un petit angle par rapport à cette direction, alors que d'autres entrefers en quinconce sont inclinés en sens inverse. De cette manière les informations inscrites sur des pistes voisines peuvent se distinguer par l'inclinaison de l'aimantation ce qui limite le risque de diaphonie lors de la lecture.

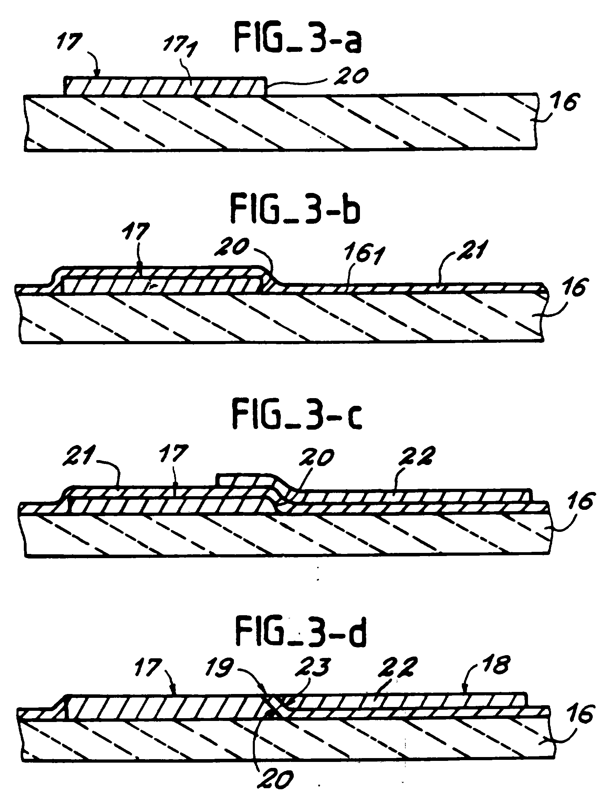

Pour réaliser en couches minces l'entrefer 19 ainsi que les pôles 17 et 18 on procède comme représenté sur les figures 3ₐ, 3_{b}, 3_{c} et 3_{d} :

On forme d'abord la pièce polaire 17 sur la plaque amagnétique 16. Sur la figure 3ₐ le flanc 20 perpendiculaire à la surface 16₁ constitue l'extrémité de la partie 17₁ de cette pièce 17, c'est-à-dire une des faces de l'entrefer. Le dépôt de la pièce 17 s'effectue par exemple par photogravure.

Ensuite (figure 3_{b}) on dépose une couche amagnétique 21 d'épaisseur inférieure à celle de la couche 17 et qui couvre à la fois la surface 16₁ de la plaque 16 et la couche 17 ainsi que son flanc 20.

Sur la partie de la couche 21 qui est adjacente au flanc 20 de la couche magnétique 17 on dépose une autre couche magnétique 22 (figure 3_{c}).

Enfin (figure 3_{d}) on polit l'ensemble des couches ainsi formées de façon à dégager la pièce 17. On voit donc qu'on forme de cette manière la pièce polaire 18 et l'entrefer 19 entre le flanc 20 de la pièce 17 et le flanc 23 de la pièce polaire 18.

Ce procédé, déjà décrit clans le brevet français n° 86 14974 au nom de la demanderesse, permet de réaliser de façon particulièrement simple une tête magnétique en couches minces tout en contrôlant convenablement l'épaisseur de l'entrefer 19. Il est vrai que la couche amagnétique 21 qui reste entre la plaque 16 et la pièce polaire 18 constitue un obstacle à la fermeture du circuit magnétique; mais dans la pratique on a constaté que la présence de cette couche 21 n'altérait pratiquement pas les performances de la tête.

Le circuit magnétique de chaque tête est fermé par la plaque de ferrite 10.

En variante (non représentée) après l'installation des fils 14, 15 dans les rainures correspondantes, on remplit ces rainures d'une résine ou d'une autre matière fusible ou thermodurcissable, puis on polit la face ainsi formée et on dépose directement sur cette face polie les pièces polaires 17, 18 et l'entrefer 19 aux emplacements des pavés 17', 18'. Le dépôt peut s'effecttier par exemple par le procédé décrit ci-dessus en relation avec les figures 3ₐ à 3_{d}. Avec cette technique on se passe du substrat 16 amagnétique, ce qui peut améliorer les performances.

Le dispositif de tête magnétique ainsi décrit permet d'inscrire une série d'informations de type numérique sur un support magnétique, par exemple une bande. Une information binaire de 1 (ou de 0) est inscrite sur la bande soit par une aimantation de sens déterminé et de valeur dépassant un seuil, soit par la transition entre deux aimantations de sens opposés et de valeurs supérieures à un seuil.

Pour inscrire un tel chiffre binaire avec une tête de position nm, c'est-à-dire qui se trouve sur la ligne de rang n et la colonne de rang m, on injecte un courant d'intensité I sur le conducteur de ligne de rang n et sur le conducteur de colonne de rang m. Par contre dans les autres conducteurs on injecte des courants d'intensité - I/3.

L'intensité I crée un champ magnétique de valeur insuffisante pour inscrire le chiffre binaire sur la bande. Par contre les champs magnétiques créés par les deux conducteurs parcourus par un courant I engendrent un champ magnétique suffisant pour inscrire un chiffre binaire.

Le champ créé par le courant d'intensité - I/3 sur les lignes et colonnes non adressées réduit les champs parasites. En effet en un point (normalement non adressé) qui correspond à un conducteur de ligne (ou colonne) parcouru par un courant I et un conducteur de colonne (ou ligne) parcouru par un courant - I/3 le champ magnétique créé est équivalent à celui engendré par un courant I -1/3 = 21/3. Le champ parasite nécessairement créé est ainsi diminué.

On a d'ailleurs constaté expérimentalement que des champs parasites qui sont de l'ordre de grandeur du tiers du champ d'écriture n'affectent le signal de lecture que dans une proportion acceptable (de 10 à 20%). Si sur les lignes ou colonnes non adressées l'intensité du courant était nulle on obtiendrait alors à l'intersection d'une ligne non adressée et d'une colonne adressée (ou l'inverse) une aimantation correspondant à un courant I, ce qui rendrait la lecture encore plus difficile. Si dans les conducteurs de lignes ou colonnes non adressées on faisait circuler un courant de polarité opposée mais de valeur absolue plus importante, par exemple - 1/2, on obtiendrait alors à l'intersection des lignes et colonnes non adressées une aimantation correspondant à un courant - I, ce qui produirait un signal parasite pour l'aimantation de polarité opposée.

Dans l'exemple de la figure 4 on dispose de cinq fils de lignes, 14₁ à 14₅, et de six fils de colonnes, 15₁ à 15₆, soit en tout trente têtes magnétiques. Dans cet exemple les lignes 14₁, 14₃ et 14₄ et la colonne 15₄ sont adressées, c'est-à-dire que ces conducteurs sont parcourus par un courant d'intensité I alors que les autres sont parcourus par un courant d'intensité - 1/3. Ainsi on inscrit trois points : ceux qui se trouvent à l'intersection de la colonne 15₄ et des lignes 14₁, 14₃ et 14₄.

Selon une variante (figure 4ₐ) sur chaque ligne on applique successivement deux impulsions de courant de sens contraires, d'abord une impulsion positive d'intensité 2I₁/3 ensuite une impulsion négative d'intensité - 2I₁/3 . Sur les conducteurs de colonnes on applique des intensités constantes I₁/3 si on veut inscrire un chiffre "1" binaire, ou - I₁/3 si on eut inscrire un "0" binaire.

A l'intersection des conducteurs 14₁ et 15₁ quand apparaît l'impulsion 2I₁/3 son effet s'ajoute à celui du courant I₁/3 sur le conducteur 15₁ pour aimanter le support magnétique avec un champ correspondant au courant I₁ de valeur suffisante pour inscrire un "1", Par contre ensuite lors de l'impulsion négative -2I₁/3 l'aimantation correspond au courant -I₁/3 qui engendre un champ insuffisant pour effacer l'information déjà inscrite.

A l'intersection du conducteur 14₁ et du conducteur 15₂ de la figure 4ₐ lors de l'apparition de l'impulsion positive, l'aimantation correspond à un courant d'intensité I₁/3 insuffisante pour inscrire ou effacer une information. Quand survient l'impulsion négative -2I₁/3 l'aimantation est équivalente à celle produite par un courant -I₁, ce qui permet l'inscription d'un "0".

Il est à noter que dans cette réalisation, contrairement à ce qui a été décrit en relation avec la figure 4, une information est inscrite sur tous les points de chaque ligne .

De façon générale dans ce mode de réalisation la somme des courants de lignes et de colonnes est, à l'apparition de l'impulsion de même signe que le courant sur la colonne associée, suffisante pour inscrire une information; lors de l'impulsion de sens contraire la somme des courants est insuffisante pour inscrire ou effacer une information. Des résultats favorables sont obtenus quand la valeur absolue d'une alternance de l'intensité bipolaire est égale au double de la valeur absolue de l'intensité constante dans une colonne.

Dans la variante représentée sur la figure 5 le dispositif à têtes magnétiques a également la forme générale d'un rectangle. Il se distingue cependant de celui représenté sur la figure 1 par le fait que les pièces polaires d'une tête ne sont pas selon la direction d'une diagonale mais selon la direction d'un côté 30 du rectangle.

Ainsi les pièces polaires forment de simples bandes allongées parallèlement au côté 30. Les pièces polaires, par exemple celle de référence 31 sur la figure 5, qui ne sont pas aux extrémités (près des bords 32 et 33 perpendiculaires au bord 30) sont communes à deux têtes magnétiques. On voit en particulier que la pièce 31 est bordée par deux entrefers 34 et 35.

Dans la plaque de ferrite 36 les rainures qui reçoivent les conducteurs d'inscription de signaux sont de direction diagonale.

Pour obtenir un adressage et une excitation matriciels analogues à ceux de la figure 4, chaque conducteur présente deux parties en série. Par exemple le conducteur 36₂ présente une première partie rectiligne associée à l'entrefer 37 sur la seconde ligne, et à l'entrefer 34 sur la première ligne, ainsi qu'une seconde partie 36₂', en série avec la première partie, associée à des entrefers 38, 39 et 40 sur les troisième, quatrième et cinquième lignes. Seul un conducteur de diagonale 36₅ ne présente qu'une seule partie. Tous les conducteurs de lignes (en deux parties ou une seule partie) rencontrent le même nombre de têtes.

De même la plupart des conducteurs de colonnes qui sont selon l'autre diagonale présentent deux parties en série; ils rencontrent tous le même nombre de têtes. Ces conducteurs 41 ont été représentés en traits interrompus sur la figure 5.

Pour le reste la réalisation est la même que dans le cas de la figure 1.

On a représenté sur la figure 6 un dispositif à têtes magnétiques du type de celui décrit en relation avec la figure 1 ou la figure 5 inscrivant simultanément sur une bande magnétique un nombre de pistes 51, 52, etc... égal au nombre de têtes magnétiques dans le dispositif 48.

Pour permettre que l'écartement entre les pistes soit constant, les entrefers des diverses tètes sur une même ligne sont séparés par une distance constante et la projection, sur la direction 53 transversale de la bande 50, de la distance séparant le dernier entrefer 54 d'une ligne du premier entrefer 55 de la ligne suivante est égale à la projection, sur cette même direction 53, de la distance séparant deux entrefers voisins sur une même ligne.

On voit qu'avec la disposition de la figure 6 on peut inscrire un grand nombre de lignes sur une bande magnétique 50 sans une densité trop importante de têtes magnétiques dans le dispositif 48.

Pour la lecture des informations inscrites par le dispositif à têtes magnétiques on peut soit faire appel à ce même dispositif, soit utiliser tout autre dispositif de lecture, notamment de type magnéto-optique. Un dispositif particulièrement approprié est par exemple celui décrit dans le brevet français 84 08252 dans lequel on prévoit une source lumineuse telle qu'un laser, un transducteur magnéto-optique comportant une couche d'un matériau ferrimagnétique aimanté par la bande lorsqu'elle passe à proximité de ce matériau et une couche réfléchissante sur ce matériau à proximité de la bande. Le faisceau lumineux traverse la matériau ferrimagnétique qui est réfléchi par la couche réfléchissante. De cette manière la direction de polarisation du faisceau subit une rotation dans un sens dépendant de l'aimantation de la zone observée, et la réflexion permet de doubler l'angle de rotation.

## Revendications

1. Dispositif à têtes magnétiques (M₁, M₂...) pour l'inscription d'informations sur un support magnétique (50), dans lequel les têtes (M₁, M₂) sont disposées sous forme d'un réseau matriciel et, pour l'excitation de chaque tête, on prévoit un réseau de fils conducteurs (14, 15) associés au réseau matriciel, chaque entrefer (19) étant en regard du croisement de deux fils conducteurs, caractérisé en ce que le dispositif comporte une plaque (10) en matériau magnétique avec des rainures (11, 12) dans lesquelles sont disposés les conducteurs (14, 15).

2. Dispositif selon la revendication 1, caractérisé en ce que les pièces polaires (17, 18) associées aux entrefers (19) des têtes sont en couches minces.

3. Dispositif selon la revendication 1, caractérisé en ce que les rainures dans lesquelles sont installés les fils conducteurs sont remplies d'un matériau amagnétique, par exemple thermodurcissable, de façon que la face rainurée (13) de la plaque (10) soit plane.

4. Dispositif selon la revendication 1, caractérisé en ce que les pièces polaires (17, 18) associées à l'entrefer (19) de chaque tête magnétique sont des couches minces déposées sur la face rainurée de la plaque magnétique (10).

5. Dispositif selon la revendication 1, caractérisé en ce que les pièces polaires (17, 18) associées aux entrefers (19) des têtes sont déposées en couches minces sur une plaque (16) rapportée sur la plaque magnétique (10).

6. Dispositif selon la revendication 2, caractérisé en ce que l'entrefer (19) forme un rebord d'une couche (21) disposée sous l'une des couches (22) formant une pièce polaire (18).

7. Dispositif selon la revendication 1, caractérisé en ce que les fils conducteurs d'excitation ont une direction oblique par rapport à la direction qu'occupent les pièces polaires des têtes magnétiques.

8. Dispositif selon la revendication 2, caractérisé en ce que chaque pièce polaire (17) comporte une partie principale (17₂) et une saillie (17₁) à l'extrémité de laquelle est formé l'entrefer (19).

9. Dispositif selon la revendication 2, caractérisé en ce que chaque pièce polaire est sous forme d'une bande allongée (31).

10. Dispositif, selon la revendication 9, caractérisé en ce que certaines desdites bandes allongées (31) sont communes à deux têtes magnétiques.

11. Dispositif à têtes magnétiques (M₁, M₂...) selon la revendication 1 caractérisé en ce que l'intensité du courant électrique dans chaque conducteur d'une tête inscrivant une information sur le support (50) présente une première valeur (I), les tètes ne devant pas inscrire d'information étant associées à au moins un conducteur parcouru par un courant d'une intensité ayant une seconde valeur déterminée (-I/3), inférieure en valeur absolue à la première valeur.

12. Dispositif selon la revendication 11, caractérisé en ce que la seconde valeur (-I/3) est d'environ le tiers de la première et on ce que le sens du courant électrique ayant l'intensité de la seconde valeur est tel qu'il engendre un champ magnétique s'opposant au champ créé par les conducteurs parcourus par l'intensité de la première valeur (I).

13. Dispositif à têtes magnétiques (M₁, M₂...) selon la revendication 1 caractérisé en ce qu'étant destiné à inscrire des informations binaires, un conducteur associé à une tête inscrivant une information sur le support (50) est parcouru par deux impulsions successives de polarités opposées et en ce que l'autre conducteur associé à la tête est parcouru par un courant d'intensité constante, la somme de cette intensité constante et de l'intensité de l'impulsion de même signe que ce courant constant étant suffisante pour inscrire une information tandis que la somme de l'intensité constante et de l'impulsion de polarité opposée est insuffisante pour inscrire ou effacer une information, le signe de l'intensité constante dépendant de la valeur du chiffre (0,1) binaire à inscrire.

14. Dispositif selon la revendication 13, caractérisé en ce que l'intensité du courant constant est environ la moitié de l'intensité d'une impulsion dans un sens.

15. Dispositif à têtes magnétiques (M₁, M₂...) selon la revendication 1 caractérisé en ce que les intensités des courants électriques dans chaque conducteur d'une tête ne devant pas inscrire d'informations sont telles qu'ils engendrent des champs parasites de l'ordre de grandeur du tiers du champ d'écriture.

16. Dispositif selon l'une quelconque des revendications précédentes, caractérisé en ce que le réseau matriciel est plan.

17. Dispositif selon l'une quelconque des revendications précédentes, caractérisé en ce que les fils conducteurs (14, 15) sont rectilignes.

18. Dispositif selon la revendication 1, caractérisé en ce que les fils conducteurs sont non bobinés.

19. Dispositif selon l'une quelconque des revendications précédentes, caractérisé en ce qu'en projection sur une direction déterminée (53) la distance entre têtes voisines d'une même ligne est constante et est égale à la distance séparant la dernière tête (54) d'une ligne de la première tête (55) de la ligne suivante.

20. Dispositif selon l'une quelconque des revendications précédentes, caractérisé en ce que tous les fils de ligne sont associés à un même nombre de têtes magnétiques.

21. Dispositif selon l'une quelconque des revendications précédentes, caractérisé en ce que tous les fils de colonne sont associés à un même nombre de têtes magnétiques.

22. Dispositif selon la revendication 20 ou 21, caractérisé en ce qu'au moins certains des fils de lignes ou de colonnes présentent deux parties parallèles, les nombres de têtes traversées par chacune des parties étant inégaux.

## Patentansprüche

1. Magnetkopfanordnung (M₁, M₂, ...) zum Schreiben von Informationen auf einen magnetischen Träger (50), in der die Köpfe (M₁, M₂) in Form eines Matrixrasters angeordnet sind und für die Erregung jedes Kopfes ein Netz von dem Matrixraster zugeordneten Leiterdrähten (14, 15) vorgesehen ist, wobei sich jeder Luftspalt (19) gegenüber dem Schnittpunkt zweier Leiterdrähte befindet, dadurch gekennzeichnet, daß die Anordnung eine Platte (10) aus magnetischem Material mit Rillen (11, 12) enthält, in denen die Leiter (14, 15) angeordnet sind.

2. Anordnung nach Anspruch 1, dadurch gekennzeichnet, daß die zu den Luftspalten (19) der Köpfe gehörenden Polstücke (17, 18) aus Dünnfilmen bestehen.

3. Anordnung nach Anspruch 1, dadurch gekennzeichnet, daß die Rillen, in denen die Leiterdrähte angebracht sind, mit einem nichtmagnetischen, z. B. wärmeaushärtbaren Material gefüllt sind, so daß die gerillte Fläche (13) der Platte (10) eben ist.

4. Anordnung nach Anspruch 1, dadurch gekennzeichnet, daß die zum Luftspalt (19) jedes Magnetkopfes gehörenden Polstücke (17, 18) Dünnfilme sind, die auf die gerillte Fläche der magnetischen Platte (10) aufgebracht sind.

5. Anordnung nach Anspruch 1, dadurch gekennzeichnet, daß die zu den Luftspalten (19) der Köpfe gehörenden Polstücke (17, 18) als Dünnfilme auf eine Platte (16) aufgebracht sind, die an die magnetische Platte (10) angefügt ist.

6. Anordnung nach Anspruch 2, dadurch gekennzeichnet, daß der Luftspalt (19) einen Rand einer Schicht (21) bildet, die unter einer der Schichten (22), die ein Polstück (18) bilden, angeordnet ist.

7. Anordnung nach Anspruch 1, dadurch gekennzeichnet, daß die Erregungsleiterdrähte eine Richtung besitzen, die in bezug auf die Richtung, welche die Polstücke der Magnetköpfe einnehmen, schräg ist.

8. Anordnung nach Anspruch 2, dadurch gekennzeichnet, daß jedes Polstück (17) einen Hauptteil (17₂) und an dem Ende, an dem der Luftspalt (19) gebildet ist, einen Vorsprung (17₁) enthält.

9. Anordnung nach Anspruch 2, dadurch gekennzeichnet, daß jedes Polstück die Form eines länglichen Streifens (31) besitzt.

10. Anordnung nach Anspruch 9, dadurch gekennzeichnet, daß bestimmte der langgestreckten Streifen (31) zwei Magnetköpfen gemeinsam sind.

11. Magnetkopfanordnung (M₁, M₂ ...) nach Anspruch 1, dadurch gekennzeichnet, daß die Stärke des elektrischen Stroms in jedem Leiter eines Kopfes, der auf den Träger (50) eine Information schreibt, einen ersten Wert (I) aufweist, wobei die Köpfe, die keine Information schreiben sollen, zu wenigstens einem Leiter gehören, der von einem Strom durchflossen wird, dessen Stärke einen zweiten bestimmten Wert (-I/3) besitzt, dessen Absolutwert kleiner als der erste Wert ist.

12. Anordnung nach Anspruch 11, dadurch gekennzeichnet, daß der zweite Wert (- I/3) ungefähr ein Drittel des ersten beträgt und daß die Richtung des elektrischen Stroms, dessen Stärke den zweiten Wert besitzt, derart ist, daß er ein Magnetfeld erzeugt, das dem Feld entgegengesetzt ist, das durch die Leiter erzeugt wird, welche mit der Stärke des ersten Wertes (I) durchflossen werden.

13. Magnetkopfanordnung (M₁, M₂,...) nach Anspruch 1, dadurch gekennzeichnet, daß dann, wenn binäre Informationen geschrieben werden sollen, ein Leiter, der zu einem Kopf gehört, der eine Information auf den Träger (50) schreibt, von zwei aufeinanderfolgenden Impulsen mit entgegengesetzten Polaritäten durchlaufen wird und daß der andere zu dem Kopf gehörende Leiter von einem Strom mit konstanter Stärke durchflossen wird, wobei die Summe aus dieser konstanten Stärke und der Intensität des Impulses mit gleichem Vorzeichen wie dieser konstante Strom ausreicht, um eine Information zu schreiben, während die Summe aus der konstanten Stärke und dem Impuls mit entgegengesetzter Polarität nicht ausreicht, um eine Information zu schreiben oder zu löschen, wobei das Vorzeichen der konstanten Stärke vom Wert der zu schreibenden Binärziffer (0,1) abhängt.

14. Anordnung nach Anspruch 13, dadurch gekennzeichnet, daß die konstante Stromstärke ungefähr die Hälfte der Stärke eines Impulses in einer Richtung ist.

15. Magnetkopfanordnung (M₁, M₂, ...) nach Anspruch 1, dadurch gekennzeichnet, daß die Stärken der elektrischen Ströme in jedem Leiter eines Kopfes, die keine Informationen schreiben sollen, derart sind, daß sie parasitäre Felder in der Größenordnung eines Drittels des Schreibfeldes zur Folge haben.

16. Anordnung nach irgendeinem der vorangehenden Ansprüche, dadurch gekennzeichnet, daß das Matrixraster eben ist.

17. Anordnung nach irgendeinem der vorangehenden Ansprüche, dadurch gekennzeichnet, daß die Leiterdrähte (14, 15) geradlinig sind.

18. Anordnung nach Anspruch 1, dadurch gekennzeichnet, daß die Leiterdrähte nicht gewickelt sind.

19. Anordnung nach irgendeinem der vorangehenden Ansprüche, dadurch gekennzeichnet, daß in der Projektion auf eine bestimmte Richtung (53) der Abstand zwischen benachbarten Köpfen derselben Zeile konstant und gleich dem Abstand ist, der den letzten Kopf (54) einer Zeile vom ersten Kopf (55) der folgenden Zeile trennt.

20. Anordnung nach irgendeinem der vorangehenden Ansprüche, dadurch gekennzeichnet, daß sämtliche Zeilendrähte derselben Anzahl von Magnetköpfen zugeordnet sind.

21. Anordnung nach irgendeinem der vorangehenden Ansprüche, dadurch gekennzeichnet, daß sämtliche Spaltendrähte derselben Anzahl von Magnetköpfen zugeordnet sind.

22. Anordnung nach Anspruch 20 oder 21, dadurch gekennzeichnet, daß wenigstens bestimmte der Zeilendrähte oder der Spaltendrähte zwei parallele Teile aufweisen, wobei die Anzahl von Köpfen, die von einem der Teile durchquert werden, von der Anzahl von Köpfen, die von dem anderen Teil durchquert werden, verschieden ist.

## Claims

1. Device with magnetic heads (M₁, M₂...) for registering information on a magnetic medium (50), in which the heads (M₁, M₂) are arranged in the form of a matrix network and, for the excitation of each head, there is provided a network of conductive wires (14, 15) associated with the matrix network, each gap (19) being opposite the intersection of two conductive wires, characterized in that the device includes a wafer (10) of magnetic material with grooves (11, 12) in which the conductors (14, 15) are arranged.

2. Device according to Claim 1, characterized in that the pole pieces (17, 18) associated with the gaps (19) in the heads are made of thin layers.

3. Device according to Claim 1, characterized in that the grooves in which the conductive wires are installed are filled with a non-magnetic material, which is for example a heat-setting material, so that the grooved face (13) of the wafer (10) is plane.

4. Device according to Claim 1, characterized in that the pole pieces (17, 18) associated with the gap (19) in each magnetic head are thin layers deposited on the grooved face of the magnetic wafer (10).

5. Device according to Claim 1, characterized in that the pole pieces (17, 18) associated with the gaps (19) in the heads are deposited in thin layers on a wafer (16) attached onto the magnetic wafer (10).

6. Device according to Claim 2, characterized in that the gap (19) forms a rim of a layer (21) deposited under one of the layers (22) forming a pole piece (18).

7. Device according to Claim 1, characterized in that the conductive excitation wires have an oblique direction relative to the direction occupied by the pole pieces of the magnetic heads.

8. Device according to Claim 2, characterized in that each pole piece (17) includes a main part (17₂) and a projection (17₁) at the end of which the gap (19) is formed.

9. Device according to Claim 2, characterized in that each pole piece is in the form of an elongated strip (31).

10. Device according to Claim 9, characterized in that some of the said elongated strips (31) are common to two magnetic heads.

11. Device with magnetic heads (M₁, M₂...) according to Claim 1, characterized in that the intensity of the electric current in each conductor of a head registering an item of information on the medium (50) exhibits a first value (I), the heads which are not required to register an information item being associated with at least one conductor traversed by a current of an intensity having a second specified value (-I/3), which is less in absolute value than the first value.

12. Device according to Claim 11, characterized in that the second value (-I/3) is around one third of the first and in that the direction of the electric current having the intensity of the second value is such that it generates a magnetic field opposed to the field created by the conductors traversed by the intensity of the first value (I).

13. Device with magnetic heads (M₁, M₂...) according to Claim 1, characterized in that, being intended to register binary information, a conductor associated with a head registering an information item on the medium (50) is traversed by two successive pulses with opposite polarities and in that the other conductor associated with the head is traversed by a current of constant intensity, the sum of this constant intensity and of the intensity of the pulse with the same sign as this constant current being sufficient to register an information item whereas the sum of the constant intensity and of the pulse of opposite polarity is insufficient to register or erase an information item, the sign of the constant intensity depending on the value of the binary digit (0, 1) to be registered.

14. Device according to Claim 13, characterized in that the intensity of the constant current is around one half of the intensity of a pulse in one direction.

15. Device with magnetic heads (M₁, M₂...) according to Claim 1, characterized in that the intensities of the electric currents in each conductor of a head which is not required to register information are such that they generate parasitic fields of the order of magnitude of one third of the write field.

16. Device according to any one of the preceding claims, characterized in that the matrix network is plane.

17. Device according to any one of the preceding claims, characterized in that the conductive wires (14, 15) are straight.

18. Device according to Claim 1, characterized in that the conductive wires are not coiled.

19. Device according to any one of the preceding claims, characterized in that under projection onto a specified direction (53) the distance between neighbouring heads of the same row is constant and equal to the distance separating the last head (54) of a row from the first head (55) of the next row.

20. Device according to any one of the preceding claims, characterized in that all the row wires are associated with the same number of magnetic heads.

21. Device according to any one of the preceding claims, characterized in that all the column wires are associated with the same number of magnetic heads.

22. Device according to Claim 20 or 21, characterized in that at least some of the row wires or column wires have two parallel parts, the numbers of heads crossed by each of the parts being unequal.
